# EUROPEAN PATENT APPLICATION

(11) **EP 4 775 642 A1**
(43) Date of publication of application: **15.07.2026**
(21) Application number: 25150816.4
(22) Date of filing: 09.01.2025
(51) Int. Cl.: C09K 5/10

(54) **COOLANT**

(71) Applicant: Mozeiko, Artem, Joniskio r.sav. (LT); Mozeiko, Aleksandr, Nijkerk (NL)
(72) Inventor: Mozeiko, Artem, Joniskio r.sav. (LT)
(74) Representative: Zacco Sweden AB

(57) **Abstract**

A coolant for use in a heating or cooling system, the coolant comprising: water, glycerine, a corrosion inhibitor, and an anti-foaming agent.

## Description

### TECHNICAL FIELD

The present disclosure relates to a coolant that can be used in a heating system, cooling system or in an air-conditioning system.

### BACKGROUND ART

In many heating systems water is used as a coolant. Such coolants has a number of disadvantages. When the heating system is exposed to an aquatic environment, this may result in deposit formation on internal parts of the heating system, hardening, degradation, swelling etc. of gasket materials in the heating system, and corrosion and oxidation of boiler parts of the heating system. This may lead to costly repairs of the heating system. Further, water as coolant cannot be used under low-temperature conditions and may result in frozen coolant lines, which can cause significant damage to the system. At high temperatures or heavy load conditions, water can boil and create steam pockets, leading to overheating and potential system failure.

These factors make water less ideal as a standalone coolant in many heating systems, especially in environments with extreme temperatures or where long-term system integrity is crucial.

As water coolants cannot be used under low-temperature conditions. In various industries, synthetic organic liquids are widely used as or in low-temperature coolants, which include alkyl aromatized compounds, ethers, glycols, the disadvantage of which is their toxicity and flammability. Ethylene glycol lowers the freezing point and raises the boiling point of the coolant, making it suitable for use in a wide range of temperatures.

A glycol-containing coolant can withstand lower temperatures than water-coolants. One disadvantage with water-glycol coolants is evaporation of water, especially at high heating temperatures, which causes changes in the viscosity of the coolant causing loss of fire resistance. Glycol, especially ethylene glycol, can be corrosive under certain conditions. When exposed to heat or oxygen, glycol can break down into organic acids, which can cause severe corrosion to metals. Another main disadvantage of this coolant is the high toxicity of ethylene glycol.

### SUMMARY OF THE INVENTION

It is an object of the present disclosure to provide a non-toxic/ less toxic coolant for use in a heating/cooling system or an air-conditioning system.

The invention is defined by the appended independent patent claims. Non-limiting embodiments emerge from the dependent claims, the appended drawings and the following description.

According to a first aspect there is provided a coolant for use in a heating or cooling system, the coolant comprising:
40-60 wt. % water,
30-50 wt.% glycerine, wherein a ratio of water to glycerine is 0.5:1 to 2:1,
5-10 wt.% of a corrosion inhibitor, and
0.001-0.005 wt.% of an anti-foaming agent.

This coolant may be used in a heating/cooling system or in an air-conditioning system, such as in domestic and industrial heating systems. Such coolant, can be operated in a temperature range of about -30 to 110 °C. (The exact operation temperature depending on the proportions of the ingoing components.)

The coolant may further comprise 0.001-0.005 wt.% of a dyeing agent.

The corrosion inhibitor used in the coolant may be a phosphate-based inhibitor.

The anti-foaming agent may be a silicon-based anti-foaming agent, such as polydimethylsiloxane.

### DETAILED DESCRIPTION

Below is described in more detail a coolant for use in a heating/cooling system or an air-conditioning system.

The coolant comprises:
40-60 wt. % water,
30-50 wt.% glycerine, wherein a ratio of water to glycerine is 0.5:1 to 2:1,
5-10 wt.% of a corrosion inhibitor, and
0.001-0.005 wt.% of an anti-foaming agent.

This coolant may be used in a heating/cooling system or in an air-conditioning system, such as in domestic and industrial heating systems. Such coolant, can be operated in a temperature range of about -30 to 110 °C. (The exact operation temperature depending on the proportions of the ingoing components.)

The coolant consists essentially of water, glycerine, corrosion inhibitor and anti-foaming agent. At least 90 wt.%, at least 95 wt.%, or at least 98 wt.% or f the coolant is constituted by water, glycerine, corrosion inhibitor and anti-foaming agent. The rest may be other additives, such as dyes.

A ratio of water to glycerine is 0.5:1 to 2:1, 1:1 to 2:1, or 0.5:1 to 1:1.

The amount of water in the coolant is 40-60 wt. %, 45-60 wt. %, 50-60 wt. %, 55-60 wt. %, 40-55 wt. %, 40-50 wt. %, 40-45 wt. % or 45-55 wt. %

The amount of glycerine in the coolant is 30-50 wt.%, 35-50 wt.%, 40-50 wt.%, 45-50 wt.%, 30-45 wt.%, 30-40 wt.%, 30-35 wt.% or 35-45 wt.%.

The amount of corrosion inhibitor in the coolant is 5-10 wt.%, 6-10 wt.%, 7-10 wt.%, 8-10 wt.%, 9-10 wt.%, 5-9 wt.%, 5-8 wt.%, 5-7 wt.%, 5-6 wt.%, 6-9 wt. %, or 7-8 wt. %.

The amount of anti-foaming agent in the coolant is 0.001-0.005 wt.%, 0.002-0.005 wt.%, 0.003-0.005 wt.%, 0.004-0.005 wt.%, 0.001-0.004 wt.%, 0.001-0.003 wt.%, 0.001-0.002 wt.%, or 0.002-0.004 wt.%.

The ratio of corrosion inhibitor to glycerine is 1:10 to 1:3, 1:8 to 1:3, 1:5 to 1:3, 1:10 to 1:5, 1:10 to 1:8, or 1:5 to 1:8.

The ratio of anti-foaming agent to glycerine is 1: 50 000 to 1:6 000, 1: 40 000 to 1:6 000, 1: 30 000 to 1:6 000, 1: 20 000 to 1:6 000, 1: 10 000 to 1:6 000, 1: 50 000 to 1:10 000, 1: 50 000 to 1:20 000, 1: 50 000 to 1:30 000, 1: 50 000 to 1:40 000, or 1:40 000 to 1:10 000.

The described coolant fully complies with low-temperature conditions and is capable of operating in almost any low-temperature operating environment. The coolant is an environmentally friendly product as it does not contain petroleum products and/or synthetic elements.

Compared to known coolants with e.g. ethylene glycol, the present coolant is ideal for facilities with strict environmental safety and health requirements. It can, hence, be used e.g. in private homes, multi-storey residential complexes, in preschool institutions, in medical buildings, in public spaces, in electric heaters (radiators), in refrigeration equipment for food, radio engineering, electronic and other industries.

The coolant is ready for use and does not require further mixing with water.

The water used may be distilled water.

The glycerine (glycerol/glyceryl, chemical formula C₃H₈O₃) used may be at least 95% pure glycerol and may contain impurities such as water, salts, and other organic compounds. The glycerine used may be distilled glycerine, a more purified form of glycerine, in which most of the impurities have been removed, resulting in a higher purity level of glycerol.

The glycerine used may be distilled glycerine of food grade.

Glycerine is inert and non-aggressive to the elements of the heating system, such as valves, pumps, pipes, heat exchangers etc., and is also safe for people and animals. It is non-toxic and non-flammable.

The present coolant solidifies, but does not crystallize, in the heating system at a temperature below its critical temperature (such as about minus 30°C, depending on the amount of glycerine in the coolant). The solidified coolant is a jelly-like liquid without any increase in volume. After defrosting (warming up) of the coolant, the functionality of the coolant is fully restored, without reducing the quality level. There is no damage to the system due to this solidification and defrostation of the coolant.

Compared to systems filled with water, the present coolant heats up faster and retains heat longer, thereby saving cost of heating the entire system by up to 30%.

The present coolant meet the following operating parameters:
- Does not contain toxic and flammable elements;
- Is harmless to human health and the environment;
- Is thermally resistant;
- Has a high thermal conductivity;
- Has anti-corrosion properties with non-ferrous and ferrous metals;
- Has anti-corrosion properties in relation to non-metallic gasket materials;
- Ensures safe operation of heating systems in winter.

Glycerine is prone to foaming, especially if a high-speed pump is used in the heating/cooling system. When pump blades of the system struck the glycerine-containing coolant, unwanted foam formation may occur in the system. Such foam formation can reduce the heat transfer efficiency, cause blockage and flow restrictions in the system, reduce flow rates that can lead to uneven heating/cooling and system malfunctions, and/or cause equipment damage.

Through the addition of a small amount, 0.001-0.005 wt.%, of an antifoaming agent, such as a silicon-based anti-foaming agent, such as polydimethylsiloxane, to the glycerine-based coolant, the formation of foam in the heating/cooling system can be avoided/limited. The antifoaming agent may be PMS-300 silicone fluid, which is non-toxic, not causing allergies, environmentally friendly, explosion-proof and hardly flammable. (Increasing the amount of anti-foaming agent will not improve the result, but will lead to an increase in the cost of the product itself. In turn, reducing the amount of anti-foaming agent will not lead to the desired result.)

The corrosion inhibitor effectively protects non-ferrous and ferrous metals from corrosion, and gaskets from deformation and hardening.

The coolant may further comprise 0.001-0.005 wt.% of a dye.

The dye may be a water-soluble dye, such as direct green 2C, direct blue dye 2C, and/or direct red dye 2C. By adding the dye possible leaks in the system may be detected.

The coolants can be made of different compositions depending on their limit freezing indicator (crystallization), which is determined by the amount of glycerine, and this amount, in turn, determines the amount of anti-foaming and anti-corrosion additives, and of course distilled water. Thus, the composition of the coolant with different freezing temperatures has a different amount of anti-foaming additive. To determine in which range the coolant is made, the composition of the coolant includes different colour dyes, but with the same chemical composition and in the same amount with respect to the total mass of components 0.001 to 0.005 wt.%. The blue dye 2C (water-soluble) is used in the manufacture of a coolant with a range of work from minus 15 degrees Celsius to minus 20 degrees Celsius. Green dye 2C (water-soluble) is used in the manufacture of a coolant with a range of work from minus 20 degrees Celsius to minus 25 degrees Celsius. Red dye 2C (water-soluble) is used in the manufacture of a coolant with a range of work from minus 25 degrees Celsius to minus 30 degrees Celsius. Such a solution will help to quickly determine the category of the coolant filled into the heating system.

The corrosion inhibitor used in the coolant may be a phosphate-based inhibitor, a silica-based inhibitor, an organic acid-based inhibitor, and/or a molybdate-based inhibitor.

Phosphate-based corrosion inhibitors may e.g. comprise disodium phosphate, which is an inhibitor of corrosion for aluminium and its alloys, steel, cast iron, tin and its alloys, copper, brass, and chrome-nickel coatings. By such corrosion inhibitor sulphates and other substances are not deposited on the internal walls of the heating/cooling system, there is less dissolution of components of the system, etc., which increases the reliability of the coolant.

The anti-foaming agent may be a silicon-based anti-foaming agent, such as polydimethylsiloxane.

## Claims

1. Coolant for use in a heating or cooling system, the coolant comprising:
40-60 wt. % water,
30-50 wt.% glycerine, wherein a ratio of water to glycerine is 0.5:1 to 2:1,
5-10 wt.% of a corrosion inhibitor, and
0.001-0.005 wt.% of an anti-foaming agent.

2. The coolant of claim 1, further comprising 0.001-0.005 wt.% of a dyeing agent.

3. The coolant of claim 1 or 2, wherein the corrosion inhibitor is a phosphate-based corrosion inhibitor.

4. The coolant of any of claims 1-3, wherein the anti-foaming agent is a silicon-based anti-foaming agent, such as polydimethylsiloxane.
